# EUROPEAN PATENT SPECIFICATION

(11) **EP 3 286 380 B1**
(45) Date of publication and mention of the grant of the patent: **10.04.2019**
(21) Application number: 16726168.4
(22) Date of filing: 19.04.2016
(51) Int. Cl.: E01B 31/06, B23B 41/00

(54) **APPARATUS FOR DRILLING RAILWAY RAILS**
VORRICHTUNG ZUM BOHREN VON BAHNSCHIENEN
APPAREIL PERMETTANT DE FORER DES RAILS DE CHEMIN DE FER

(30) Priority: 20.04.2015 IT MI20150566
(43) Date of publication of application: 28.02.2018
(73) Proprietor: Cembre S.p.A., 25135 Brescia (IT)
(72) Inventor: BAREZZANI, Gualtiero, I-25135 Brescia (IT); VEGLIANTI, Samuel, I-25135 Brescia (IT); ORIZIO, Michele, I-25135 Brescia (IT)
(74) Representative: Leihkauf, Steffen Falk
(86) International application number: PCT/IB2016/052223
(87) International publication number: WO 2016/170476

(56) References cited:
- EP-A2- 0 644 295
- CA-A1- 2 867 560
- US-A- 1 171 325

## Description

The present invention relates to a drill for drilling rails and track equipment in railway applications.

Apparatuses for drilling railway rails are known, comprising a motor mounted in axis with the drilling bit or drilling mill and which moves forward together with the bit itself during the operation of drilling. This structure involves a significant longitudinal dimension, which is often incompatible with certain points of the track, for example switches and the like, and generally does not allow the creation of non-horizontal holes.

A drill for drilling rails is known from Publication MI93A002026 (EP0644295A2), having a body which supports an electrical motor or spark-ignition engine, a drilling tool, a reduction gear interposed between the motor and the drilling tool, as well as means for removably fastening the body with respect to an object to be drilled, in which means are provided for translating the drilling tool with respect to the body itself.

Drills for drilling rails of the known art still have certain drawbacks.

A first problem which has not been suitably resolved is the poor visibility of the drilling area, which is usually at least partially covered or obscured by the overall dimensions of the drill itself, of the fuel tank thereof and of the electrical supply cable thereof.

A second disadvantage relates to the electrical supply of electrical drills in remote areas without an electric network and, if a battery-operated drill is to be used, to the overall dimensions and weight of the required batteries which would obstruct the placement of the drill with respect to the rail and would compromise its mass distribution.

A third drawback is the poor versatility of known drills for rails for the creation of holes of different dimensions. When used with smaller mills to make smaller holes, a drill designed for a mill of large diameter would apply a too high torque and a too low speed, which would result in premature wear of the tools. Similarly, when used with larger mills to make larger holes, a drill designed for a mill of small diameter would apply a too low torque and a too high speed, which would cause the mill bit to work on the steel under abnormal and non-optimal conditions.

A fourth problem of the known art drills is the unpredictable occurrence of breakdowns, for example to the motor, due to the heavy conditions of use and often to the improper use of the drill.

Therefore, it is the object of the present invention to provide an apparatus for drilling railway rails having features such as to obviate at least some of the drawbacks of the known art.

These and other objects are achieved by means of an apparatus for drilling railway rails according to claim 1. The dependent claims relate to advantageous and preferred embodiments.

According to one aspect of the invention, an apparatus for drilling railway rails comprises:
- a battery operable electrical motor,
- a drilling tool defining a tool axis,
- a reduction gear interposed between the motor and the drilling tool,
- a rechargeable battery,
- a substantially "L"-shaped supporting portion having a first wing which forms a joining portion to which the electrical motor is coupled, and a second wing extended in a transversal direction with respect to the first wing and supporting the drilling tool,
in which the electrical motor is arranged on the second wing and is vertically separated therefrom,
wherein both the electrical motor and the second wing protrude from the first wing in a same drilling direction of the apparatus, giving the apparatus a "U" shape,
- means for removably fastening the supporting portion with respect to an object to be drilled,
- a lighting system having two light sources spaced from each other and arranged on two opposite sides with respect to a vertical working plane containing the tool axis, wherein the two light sources generate two light cones which at least partially overlap in a drilling area of the drilling tool.

The presence and the particular configuration of the lighting system improve the visibility of the drilling area and reduce the formation of shadows in said area.

In order to better understand the invention and appreciate the advantages thereof, certain non-limiting embodiments given by way of example are described below, with reference to the accompanying drawings, in which:
figure 1 is a perspective side view of a drilling apparatus according to the invention,
figure 2 is a partial sectional side view of the drilling apparatus in figure 1,
figure 3 is a front view of the drilling apparatus in figure 1,

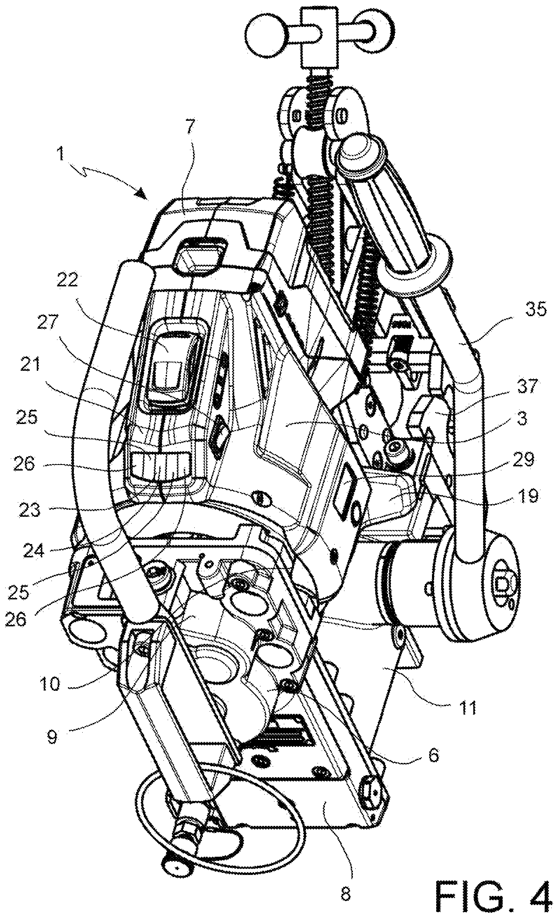

figure 4 is a perspective top side view of the drilling apparatus in figure 1,

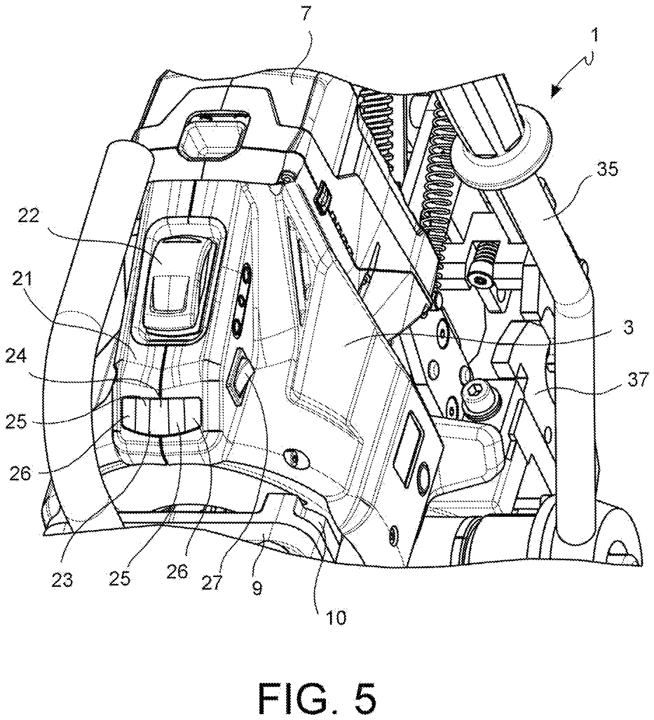

figure 5 is an enlarged view of a detail of the drilling apparatus in accordance with an embodiment,

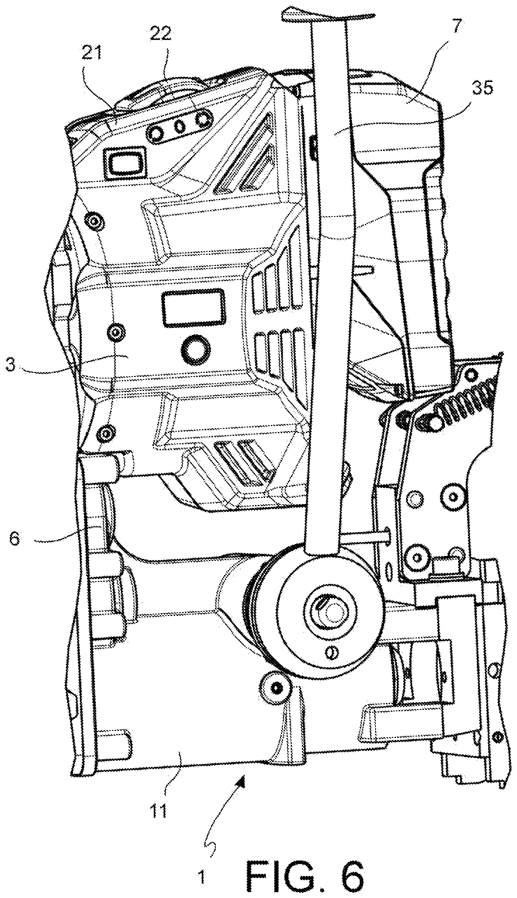

figure 6 is a further enlarged view of a detail of the drilling apparatus in accordance with an embodiment.

Referring to the drawings, an apparatus 1 for drilling railway rails 2 comprises an electrical motor 3 which can be energized by a battery, a drilling tool 4 defining a tool axis 5, a reduction gear 6 interposed between the motor 3 and the drilling tool 4, a replaceable, rechargeable battery 7 and a supporting portion 8.

The supporting portion 8 may be substantially "L"-shaped with a first wing 9 forming a joining portion 10 to which the electrical motor 3 is coupled, and a second wing 11 extended in a transversal direction, e.g. approximately perpendicular, with respect to the first wing 9 and which supports the drilling tool 4. The electrical motor is arranged over the second wing 11 and is vertically separated therefrom, and both the electrical motor 3 and the second wing 11 protrude from the first wing 9 in a same drilling direction 12 of apparatus 1, giving the apparatus 1 a "U" shape.

As is known from MI93A002026, the "U" shape reduces the overall dimensions of the drilling apparatus 1, favorably balances the mass distribution thereof and allows it to be used in different positions.

The drilling apparatus 1 further comprises means 13 for removably fastening the apparatus 1, in particular the supporting portion 8, with respect to an object (rail 2) to be drilled.

According to an aspect of the invention, the drilling apparatus 1 comprises a lighting system 14 having two light sources 15, 16 spaced from each other and arranged on two opposite sides with respect to a theoretical vertical working plane 17 containing the tool axis 5. The two light sources 14, 15, preferably two LEDs or two LED groups, generate two light fields (cones) at least partially overlapping in a drilling area 18 of the drilling tool 4.

The presence and the particular configuration of the lighting system 14 improve the visibility of the drilling area 18 and reduce the formation of shadows in said area.

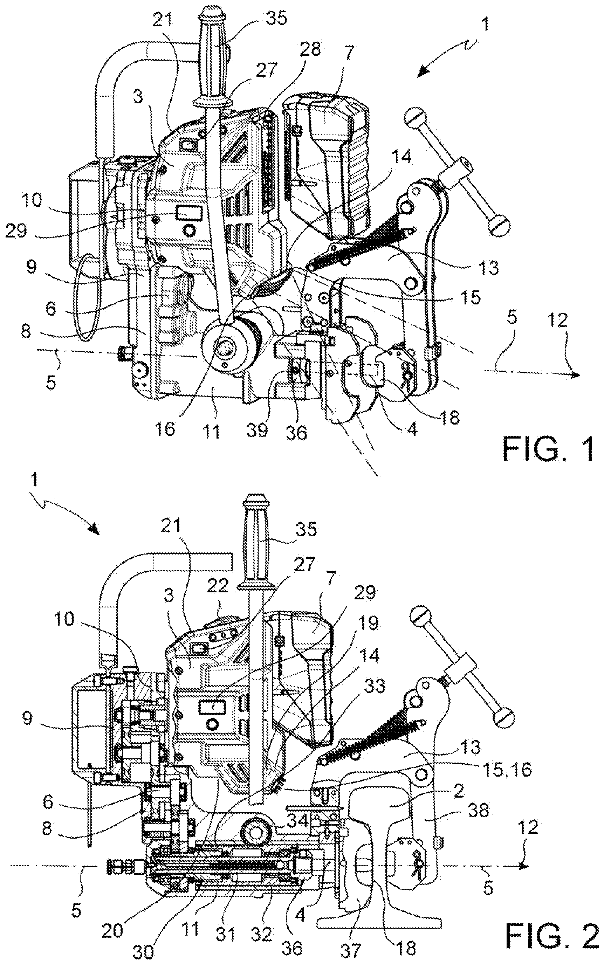

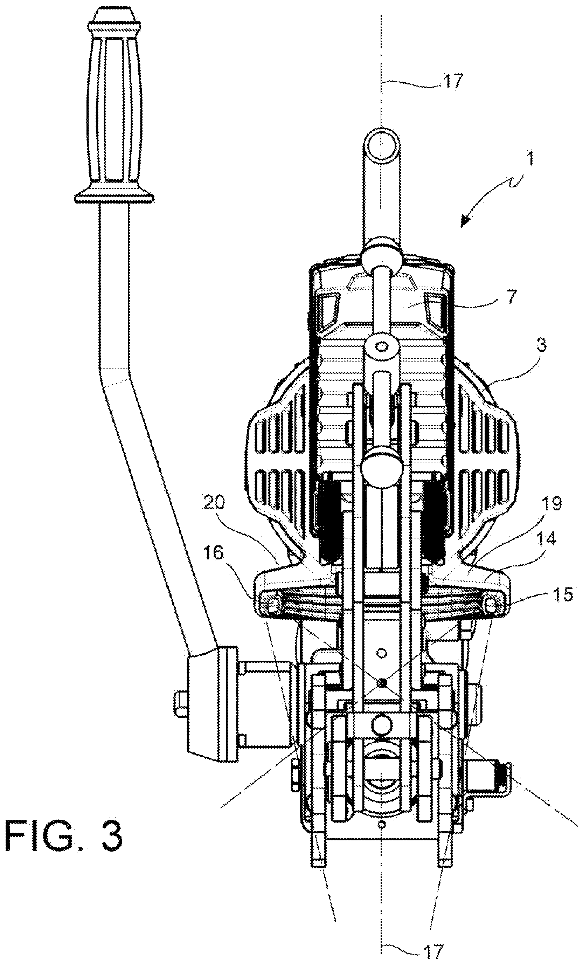

In one embodiment, the light sources 15, 16 are arranged at opposite ends of an elongated rod 19 connected to the electrical motor 3 and extended in a transversal direction, preferably orthogonal to the working plane 17. The light sources 15, 16 are advantageously arranged on a bottom side of the electrical motor 3 facing the second wing 11, but above the second wing 11 and vertically spaced from the tool axis 5. The light cones or fields of the light sources 15, 16 are directed forward (in the drilling direction 12) and downwards, as shown in figures 1 and 3. Furthermore, theoretical central axes of the light cones of the light sources 15, 16 are directed in a convergent manner towards the working plane 17, as shown in figure 3. This optimizes the lighting of the drilling area 18 and reduces the risk of blinding the user whose eyes are above and behind the light sources.

Advantageously, tthe light sources 15, 16 are arranged laterally outside the lateral overall dimension (orthogonal to the working plane 17) of the fastening means 13.

The references "above", "below", "upper", "lower", "upwards", "downwards", "vertical", "horizontal" in this description refer to the operative position of apparatus 1, as shown in figures 1, 2, 3.

The drilling apparatus 1 comprises an electronic control unit 21 connected to the rechargeable battery 7, the electrical motor 3, the lighting system 14, and to manual switching-on/command means, for example a button or a lever 22 and, when provided, further control, monitoring or signaling means, which will be described hereinbelow.

In one embodiment, the manual command means can be positioned in three separate switching positions: a stable off position, a stable on position and an instable rotational placement position of the drilling tool 4.

By bringing the manual command means to the stable on position, e.g. by pressing or moving button 22, said switching position is stably engaged even if the operator removes his/her finger from the command means, and the control unit 21 actuates the motor 3 and the motor remains on and running, preferably at the maximum- or working number of revolutions. The reduction gear 6 transfers the mechanical energy supplied by motor 3 to a mandrel which carries the drilling tool 4 and which performs the drilling of the rail 2.

The command means 22 may be manually brought to another switching position to stop the actuation of the electrical motor 3 at any time during the drilling operation.

By bringing the manual command means to the stable off position, e.g. by pressing or moving button 22, said switching position is stably engaged even if the operator removes his/her finger from the command means, and the control unit 21 turns off the motor 3 and the motor remains off and not running. The steps of turning off the apparatus 1 are dedicated to the placement of the apparatus 1 on the rail to be drilled, to the maintenance of the apparatus 1 or to the standby mode, for example.

The command means 22 may be manually brought to another switching position, e.g. to resume the operation of the electrical motor 3, at any time during the off step.

By bringing the manual command means to the instable placement position, e.g. by pressing or moving button 22, said switching position is not stably engaged and the control unit 21 actuates motor 3 at a minimum number of revolutions or at least at a reduced number of revolutions as compared to the maximum or working number of revolutions, and the motor carries out only one rotational step each time for each switching operation into the tool placement position, e.g. for every manual pressure on button 22. In the absence of switching to the tool placement position (in other words, of pressing the button), motor 3 remains off.

The reduction gear 6 transfers the mechanical energy supplied by motor 3 to the mandrel which carries the drilling tool 4 and which performs the placement step which allows an easy and precise rotational placement of the mandrel in a position which allows the access by a tightening tool (by means of dowel 39) and the release of the drilling tool 4. The single impulse imparted to the motor corresponds for example, to a 10°... 15° rotation of mandrel 36, which carries the drilling tool 4.

The command means 22 may be manually brought to another switching position to terminate the tool placement phase at any time during the tool placement phase.

The control unit (21) is configured so that, when the command means are switched to the on position:

- if a limit value of required torque (torque of motor 3) is exceeded, which is indicative of a deadlock situation (i.e. stop or significant slowing down), the motor 3 is turned off and it can be turned on again only once the command means have been switched to the off position and then switched back to the on position.

Thereby, the operator is "warned" about the deadlock situation, which is completely ineffective for the drilling and is damaging to motor 3, and may better adapt the drilling modes (advancing speed of tool 4, diameter of the mill of tool 4, adjustment of number of revolutions of motor 3) to the drilling conditions and specific features of apparatus 1.

The control unit 21 stores the total running time of the electrical motor 3 and, when provided, the number and technical parameters of the single drilling events, and generates a maintenance-need warning in dependency of the values stored and of the preset reference values, i.e. a maximum admissible running time.

In accordance with one embodiment, the drilling apparatus 1 comprises a multicolor display 23 in signal connection with the control unit 21 and having a first light-emitting area 24, e.g. green, at least a second light-emitting area 25, e.g. yellow, and at least a third light-emitting area 26, preferably red, e.g. by means of different colored LEDs.

The differently colored light-emitting areas may be sequentially arranged along a strip or in a sequence of circles or arcs, e.g. following the order: third light-emitting area 26-second light-emitting area 25-first light-emitting area 24-second light-emitting area 25-third light-emitting area 26. Alternatively, the differently colored light-emitting areas may be materially arranged in the same space, for example by means of multicolor LEDs.

The control unit 21 controls the multicolor display 23 so as to generate one or more of the following visual warnings:
Charge status of the battery 7, in which the lighting of the first light-emitting area 24 (green) indicates a high charge level, the lighting of the second light-emitting area 25 (yellow) indicates a sufficient charge level, the lighting of the third light-emitting area 26 (red) indicates an insufficient charge level. Lighting combinations are also contemplated, for example green-yellow or yellow-red, which indicate intermediate battery charge levels.

Anomaly during the drilling operation in which, when a preset maximum motor torque is exceeded, the multicolor display 23 indicates a deadlock situation by lighting the third light-emitting area (red) 26.

Electrical supply error in which, in case of insertion of a non-suitable battery and/or in case of insertion of battery 7 when the command means are switched to the on position, the multicolor display 23 indicates the anomaly by lighting the third light-emitting area (red) 26, e.g. in flashing mode.

Maintenance needed in which, when a preset maximum number of working hours is reached, the multicolor display 23 indicates that maintenance is needed, e.g. by flashing all the light-emitting areas 24, 25, 26 contemporaneously or in sequence.

Instantaneous drilling conditions in which the multicolor display 23 keeps the first light-emitting area (green) 24 on when motor 3 runs at its optimal conditions, and in which the multicolor display 23 progressively lights the second light-emitting area (yellow) 25 and then the third light-emitting area (red) 26 on a first side of the first light-emitting area (green) 24 in case of increasing motor torque over-request (deadlock situation), and in which the multicolor display 23 progressively lights the second light-emitting area (yellow) 25 and then the third light-emitting area (red) 26 on a second side of the first light-emitting area (green) 24, opposite to the first side, if the required motor torque increasingly decreases below the optimal motor torque (situation of mill sliding on the steel with insufficient chip removal).

In one embodiment, the multicolor display 23 is energized in the case of switching the command means to the on position and is turned off in the tool placement position and in the off position.

In one embodiment, the multicolor display 23 is also energized in the case of switching the command means to the tool placement position and in this case it remains on for a preset (and adjustable) time limit, e.g. 15 seconds, which is sufficient to provide the user with the warnings (maintenance, supply anomaly, etc.) described above.

In a further embodiment, the drilling apparatus 1 comprises a speed switch 27 with at least two or three stable switching positions, which allows the selection of the rotational speed of the motor 3 so as to be able to perform the drilling with mills of different diameters, while in any case remaining in an optimal circumferential speed range of the mill teeth.

In one embodiment, the control unit 21 is configured to light the lighting system 14 both in an on switching status and in a tool placement switching status.

In the on switching status, the two light sources (LEDs) 15, 16 are permanently on, i.e. over the entire drilling duration, as well as for a preset (possibly adjustable) control time, for example in the range of 10 sec ... 15 sec ... 20 sec, after the completion of the on switching phase.

In the tool placement switching status, the two light sources (LEDs) 15, 16 are on for a preset (possibly adjustable) placement time, for example in the range of 15 sec ... 30 sec ... 45 sec, starting from the switching to the tool placement position.

In one embodiment, the lighting system 14 can be disabled and enabled again by means of a preset combination of controls and/or operations of handling the drilling apparatus 1, for example by keeping the command means pressed down in the tool placement position while battery 7 is engaged.

In contrast with a universal principle of electrical drills with a rechargeable battery according to which the battery is secured to the drill on a bottom side thereof and facing away from the drilling direction and drilling area, according to one aspect of the invention, the rechargeable battery 7 is reversibly mechanically coupled to a battery interface 28 of apparatus 1 formed in an upper portion of the electrical motor 3 facing in the drilling direction 12 (figures 1, 2) and preferably vertically above the tool axis 5 and substantially centered with respect to the working plane 17. Thereby, battery 7 forms the free end of the upper wing of the "U"-shape of the structure of apparatus 1, moves the barycenter of apparatus 1 closeer to rail 2, does not create shadows when lighting the drilling area 18, is not an obstacle for the user who is on the side opposite to the drilling area 18, and does not interfere with the ballast under rail 2.

The battery interface 28 and battery 7 are advantageously configured to be mechanically coupled and electrically connected to each other by translationally sliding battery 7 from top downwards or parallel to the extension of the first wing 9 of the supporting portion 8.

Battery 7 may be a 36V 4Ah rechargeable lithium ion battery.

Apparatus 1 may comprise adapter means for the mechanical coupling and the electrical connection of different rechargeable batteries.

In accordance with an embodiment, the drilling apparatus 1 comprises a further display 29 connected to the control unit 21 for displaying numerical operative parameters, numerical apparatus parameters, and numerical control parameters of the apparatus 1.

The supporting portion 8 is advantageously made of aluminum alloy.

The axis of the output shaft of the electrical motor 3 may advantageously be parallel to, but vertically spaced from, the tool axis 5 and therefore both the axes lie on the same working plane 17.

The reduction gear 6 interposed between the output shaft of the electrical motor 3 and the drilling tool 4 may comprise a set of gear wheels (which are preferably orthogonal to the axes of the motor shaft and of the tool 5 and) directly carried by the supporting portion 8 and received in the first wing 9 (figure 2).

As is known and described in further detail in MI93A002026, means are provided for translating the drilling tool 4 with respect to the supporting portion 8, whereby during the advancing movement of the drilling tool 4 the supporting portion 8 and the motor 3 with battery 7 remain in a fixed position and the moved masses are very small.

The translation means may comprise an internally grooved sleeve 30 connected to a gear of the reduction gear 6 to be rotated by actuating the motor 3. Inside the grooved sleeve 30 there is arranged a hollow grooved shaft 31 which is rotationally coupled to sleeve 30 and which may slide with respect thereto. Shaft 31 is pivotally supported by a slider 32 which has a rack segment 33 with which the slider 32 meshes a gear 34 connected to an advancement lever 35.

The actuation of the advancement lever 35 results in the translation of slider 22 and of the grooved shaft 31 supported by the latter and rotated by the grooved sleeve 20.

The grooved shaft 31 has a mandrel 36 for securing tool 4, the mandrel 36 being at an operative end of the grooved shaft 31 facing the drilling direction 12.

Finally, the fastening means 13 may be arranged at the free end of the second wing 11 of the supporting portion 8 and may comprise one or more jigs 37 which engage the leg of the rail 2 to be drilled, and a bridge lever system 38 which extends above the rail 2 and forms an abutment on the opposite side of the leg of the rail 2.

Those skilled in the art, in order to meet contingent and specific needs, can obviously make further changes and variants to the drilling apparatus according to the present invention, which are all contained within the scope of protection of the invention, which is defined by the following claims.

## Claims

1. An apparatus (1) for drilling railway rails (2), comprising a supporting portion (8) which supports a battery operable electrical motor (3), a drilling tool (4) defining a tool axis (5) and a drilling direction (12), a reduction gear (6) interposed between the motor (3) and the drilling tool (4), a replaceable battery (7) and means (13) for the removable fastening of the supporting portion (8) to an object to be drilled,
**characterized in that** it comprises a lighting system (14) having two light sources (15, 16) separated from each other and arranged on two opposite sides with respect to a theoretical vertical working plane (17) containing the tool axis (5), wherein the two light sources (14, 15) generate two light fields at least partially overlapping in a drilling area (18) of the drilling tool (4).

2. The apparatus (1) according to claim 1, wherein:
- the supporting portion (8) is substantially "L" shaped having a first wing (9) that forms a joining portion (10), whereto the electrical motor (3) is coupled, and a second wing (11) being extended in a transversal direction with respect to the first wing (9) and supporting the drilling tool (4),
- the electrical motor (3) is arranged above the second wing (11) and vertically spaced therefrom,
- both the electrical motor (3) and the second wing (11) protrude from the first wing (9) in a same drilling direction (12) of the apparatus (1), giving the apparatus (1) a "U" shape.

3. The apparatus (1) according to claim 1 or 2, wherein the light sources (15, 16) are arranged at opposite end regions of an elongated rod (19) connected to the electrical motor (3) and extended in a transversal direction with respect to the working plane (17).

4. The apparatus (1) according to claim 2 or according to claims 2 and 3, wherein the light sources (15, 16) are arranged on a bottom side of the electrical motor (3) facing the second wing (11), but above the second wing (11) and vertically spaced from the tool axis (5), wherein the light fields of the light sources (15, 16) are directed in the drilling direction (12) and downward and central axes of the light fields of the light sources (15, 16) are directed in a convergent manner and obliquely towards the working plane (17).

5. The apparatus (1) according to any preceding claim, wherein the light sources (15, 16) are arranged laterally externally ofa lateral overall dimension perpendicular to the working plane (17) of the fastening means (13).

6. The apparatus (1) according to any preceding claim, comprising an electronic control unit (21) connected to the rechargeable battery (7), the electrical motor (3), the lighting system (14), and with manual command means (22) which can be positioned in three different switch positions:
- an "off" stable position,
- an "on" stable position,
- a "tool placement" instable position,
wherein:
- when switching the command means (22) in the "on" stable position, said "on" position is stably engaged and the control unit (21) actuates the motor (3) which then remains operating at a preset operating number of revolutions,
- when switching the command means (22) in the "off" stable position, said "off" position is stably engaged and the control unit (21) turns the motor (3) off, which then stays off,
- when switching the command means (22) in the instable "tool placement" position, said "tool placement" position is not stably engaged and the control unit (21) runs the motor (3) at a reduced number of revolution with respect to the operative number of revolution, wherein the motor (3) makes only one preset rotational step at each switching in the "tool placement" position, wherein said preset rotational step causes a less than 90° rotation of a mandrel (36) which supports the drilling tool (4).

7. The apparatus (1) according to claim 6, wherein the control unit (21) is configured so that, when the command means (22) are switched in the "on" position:
- if an upper limit value of torque required from the motor (3) is exceeded, the motor (3) is turned off and can be turned on again only after the command means (22) are switched in the "off" position and then back in the "on" position.
- the control unit (21) stores the total running time of the electrical motor (3) and generates a maintenance-need warning in dependency of the total running time and a preset comparison value.

8. The apparatus (1) according to claim 6 or 7, comprising a multicolor display (23) in signal connection with the control unit (21) and having a first light-emitting area (24) of a first color, at least one second light-emitting area 25 of a second color, and at least one third light-emitting area 26 of a third color,
wherein the control unit (21) controls the multicolor display (23) in order to generate one or more of the following visual warnings:
- battery (7) charge status,
- drilling anomaly,
- electrical supply error,
- maintenance need,
- instantaneous drilling conditions.

9. The apparatus (1) according to claim 8, wherein:
- in case of battery (7) charge status warning, the lighting of the first light-emitting area (24) indicates a high charge level, the lighting of the second light-emitting area (25) indicates a sufficient charge level, the lighting of the third light-emitting area (26) indicates an insufficient charge level,
- in case of drilling anomaly warning, when exceeding a preset maximum motor torque, the multicolor display (23) indicates a deadlock situation by lighting the third light-emitting area (26),
- in case of electrical supply error warning, in case of insertion of a non-suitable battery and/or in case of a battery (7) insertion when the command means are switched in the "on" position, the multicolor display (23) indicates the anomaly by lighting the third light-emitting area (26),
- in case of maintenance needed warning, when reaching a preset maximum number of operating hours in "on" mode, the multicolor display (23) indicates that maintenance is needed by flashing all the first, second and third (24, 25, 26) light-emitting areas contemporaneously or in a sequence,
- in case of instantaneous drilling conditions indication, the multicolor display (23) keeps the first light-emitting area (24) lightened when the motor (3) works in an optimal torque range, and wherein the multicolor display (23) progressively lights the second light-emitting area (25) and the third light-emitting area (26) on a first side of the first light-emitting area (24) in case of increasing motor torque request, and wherein the multicolor display (23) progressively lights the second light-emitting area (25) and the third light-emitting area (26) on a second side of the first light-emitting area (24), opposite to the first side, in case of motor torque decreasing below the optimal torque.

10. The apparatus (1) according to one of the preceding claim, comprising a speed switch (27) having two or more stable switching positions corresponding to different rotational speeds of the motor (3).

11. The apparatus (1) according to one of the preceding claim, wherein the rechargeable battery (7) is coupled reversibly mechanically to a battery interface (28) formed in an upper portion of the electrical motor (3) facing in the drilling direction (12) and which positions the battery (7) vertically above the tool axis (5) and substantially centered with respect to the working plane (17).

12. The apparatus (1) according to claim 11, wherein the battery interface (28) and the battery (7) are configured to mechanically couple and electrically connect to each other by sliding the battery (7) from top downward .

13. The apparatus (1) according to any preceding claim, comprising a further display (29) connected to the control unit (21) for a display of numerical operative parameters and numerical control parameters of the apparatus (1).

## Patentansprüche

1. Vorrichtung (1) zum Bohren von Gleisschienen (2), umfassend einen Halterungsabschnitt (8), welcher einen batteriebetriebenen Elektromotor (3), ein Bohrwerkzeug (4), welches eine Werkzeugachse (5) und eine Bohrrichtung (12) definiert, ein Reduktionsgetriebe (6), welches zwischen dem Motor (3) und dem Bohrwerkzeug (4) angeordnet ist, eine austauschbare Batterie (7) und Mittel (13) zum entfernbaren Befestigen des Halterungsabschnitt (8) an einem zu bohrenden Objekt haltert,
**dadurch gekennzeichnet, dass** sie ein Beleuchtungssystem (14) umfasst, welches zwei Lichtquellen (15, 16) aufweist, welche voneinander getrennt sind und an zwei entgegengesetzten Seiten in Bezug auf eine theoretische vertikale Arbeitsebene (17) angeordnet sind, welche die Werkzeugachse (5) enthält, wobei die beiden Lichtquellen (14, 15) zwei Lichtfelder erzeugen, welche in einem Bohrbereich (18) des Bohrwerkzeugs (4) wenigstens teilweise überlappen.

2. Vorrichtung (1) nach Anspruch 1, wobei:
- der Halterungsabschnitt (8) im Wesentlichen "L"-förmig ist, wobei er einen ersten Flügel (9), welcher einen Verbindungsabschnitt (10) bildet, an welchen der Elektromotor (3) gekoppelt ist, und einen zweiten Flügel (11) aufweist, welcher sich in einer transversalen Richtung in Bezug auf den ersten Flügel (9) erstreckt und das Bohrwerkzeug (4) haltert,
- der Elektromotor (3) über dem zweiten Flügel (11) und vertikal davon beabstandet angeordnet ist,
- sowohl der Elektromotor (3) als auch der zweite Flügel (11) von dem ersten Flügel (9) in einer gleichen Bohrrichtung (12) der Vorrichtung (1) vorstehen, was der Vorrichtung (1) eine "U"-Form verleiht.

3. Vorrichtung (1) nach Anspruch 1 oder 2, wobei die Lichtquellen (15, 16) an entgegengesetzten Endbereichen eines länglichen Stabs (19) angeordnet sind, welcher mit dem Elektromotor (3) verbunden ist und sich in einer transversalen Richtung in Bezug auf die Arbeitsebene (17) erstreckt.

4. Vorrichtung (1) nach Anspruch 2 oder nach Ansprüchen 2 und 3, wobei die Lichtquellen (15, 16) an einer unteren Seite des Elektromotors (3), zu dem zweiten Flügel (11) weisend, angeordnet sind, aber über dem zweiten Flügel (11) und von der Werkzeugachse (5) vertikal beabstandet, wobei die Lichtfelder der Lichtquellen (15, 16) in der Bohrrichtung (12) und nach unten gerichtet sind, und zentrale Achsen der Lichtfelder der Lichtquellen (15, 16) in einer konvergierenden Weise und schräg in Richtung der Arbeitsebene (17) gerichtet sind.

5. Vorrichtung (1) nach einem der vorhergehenden Ansprüche, wobei die Lichtquellen (15, 16) lateral extern einer lateralen Gesamtabmessung rechtwinklig zu der Arbeitsebene (17) der Befestigungsmittel (13) angeordnet sind.

6. Vorrichtung (1) nach einem der vorhergehenden Ansprüche, umfassend eine elektronische Regel-/Steuereinheit (21), welche mit der wiederaufladbaren Batterie (7), dem Elektromotor (3), dem Beleuchtungssystem (14) und mit manuellen Befehlsmitteln (22) verbunden ist, welche in drei verschiedenen Schaltpositionen positioniert werden können:
- eine stabile "Aus" Position,
- eine stabile "An" Position,
- eine instabile "Werkzeug-Anordnungs" Position,
wobei:
- wenn die Befehlsmittel (22) in die stabile "An" Position geschaltet werden, die "An" Position stabil aktiviert ist und die Regel-/Steuereinheit (21) den Motor (3) betätigt, welcher dann bei einer voreingestellten Betriebszahl von Umdrehungen arbeitend verbleibt,
- wenn die Befehlsmittel (22) in die stabile "Aus" Position geschaltet werden, die "Aus" Position stabil aktiviert ist und die Regel-/Steuereinheit (21) den Motor (3) ausschaltet, welcher dann aus bleibt,
- wenn die Befehlsmittel (22) in die instabile "Werkzeug-Anordnungs" Position geschaltet werden, die "Werkzeug-Anordnungs" Position nicht stabil aktiviert ist und die Regel-/Steuereinheit (21) den Motor (3) bei einer reduzierten Anzahl von Umdrehungen in Bezug auf bei die Betriebszahl von Umdrehungen antreibt, wobei der Motor (3) nur einen voreingestellten Rotationsschritt zu jedem Schalten in die "Werkzeug-Anordnungs" Position macht, wobei der voreingestellte Rotationsschritt eine Rotation von weniger als 90° eines Dorns (36) veranlasst, welcher das Bohrwerkzeug (4) haltert.

7. Vorrichtung (1) nach Anspruch 6, wobei die Regel-/Steuereinheit (21) so eingerichtet ist, dass, wenn die Befehlsmittel (22) in die "An" Position geschaltet werden:
- falls ein oberer Grenzwert eines Drehmoments, welches von dem Motor (3) angefordert wird, überschritten wird, der Motor (3) ausgeschaltet wird und nur wieder angeschaltet werden kann, nachdem die Befehlsmittel (22) in die "Aus" Position und dann zurück in die "An" Position geschaltet werden.
- die Regel-/Steuereinheit (21) die Gesamtlaufzeit des Elektromotors (3) speichert und eine Warnung bezüglich eines Wartungsbedürfnisses in Abhängigkeit der Gesamtlaufzeit und eines voreingestellten Vergleichswerts erzeugt.

8. Vorrichtung (1) nach Anspruch 6 oder 7, umfassend eine mehrfarbige Anzeige (23) in Signalverbindung mit der Regel-/Steuereinheit (21) und einen ersten lichtemittierenden Bereich (24) einer ersten Farbe, wenigstens einen zweiten lichtemittierenden Bereich (25) einer zweiten Farbe und wenigstens einen dritten lichtemittierenden Bereich (26) einer dritten Farbe aufweisend,
wobei die Regel-/Steuereinheit (21) die mehrfarbige Anzeige (23) regelt/steuert, um eine oder mehrere der folgenden sichtbaren Warnungen zu erzeugen:
- Batterie (7) Ladestatus,
- Bohranomalie,
- elektrischer Versorgungsfehler,
- Wartungsbedürfnis,
- momentane Bohrbedingungen.

9. Vorrichtung (1) nach Anspruch 8, wobei:
- im Falle einer Warnung eines Batterie (7) Ladestatus, die Beleuchtung des ersten lichtemittierenden Bereichs (24) einen hohen Ladungspegel anzeigt, die Beleuchtung des zweiten lichtemittierenden Bereichs (25) einen ausreichenden Ladungspegel anzeigt, die Beleuchtung des dritten lichtemittierenden Bereichs (26) einen ungenügenden Ladungspegel anzeigt,
- im Falle einer Warnung einer Bohranomalie, wenn ein voreingestelltes maximales Motordrehmoment überschritten wird, die mehrfarbige Anzeige (23) eine Blockierungssituation durch Beleuchten des dritten lichtemittierenden Bereichs (26) anzeigt,
- im Falle einer Warnung eines elektrischen Versorgungsfehlers, im Falle eines Einsetzens einer nicht geeigneten Batterie und/oder im Falle eines Einsetzens einer Batterie (7), wenn die Befehlsmittel in die "An" Position geschaltet sind, die mehrfarbige Anzeige (23) die Anomalie durch Beleuchten des dritten lichtemittierenden Bereichs (26) anzeigt,
- im Falle einer Warnung eines Wartungsbedürfnisses, wenn eine voreingestellte maximale Anzahl von Betriebsstunden in einem "An" Modus erreicht wird, die mehrfarbige Anzeige (23) anzeigt, dass eine Wartung benötigt wird, durch Erleuchten aller der ersten, zweiten und dritten (24, 25, 26) lichtemittierenden Bereiche gleichzeitig oder in einer Sequenz,
- im Falle einer Anzeige von momentanen Bohrbedingungen, die mehrfarbige Anzeige (23) den ersten lichtemittierenden Bereich (24) beleuchtet hält, wenn der Motor (3) in einem optimalen Drehmomentenbereich arbeitet, und wobei die mehrfarbige Anzeige (23) den zweiten lichtemittierenden Bereich (25) und den dritten lichtemittierenden Bereich (26) an einer ersten Seite des ersten lichtemittierenden Bereichs (24), im Falle einer ansteigenden Motormomenten-Anfrage, fortschreitend beleuchtet, und wobei die mehrfarbige Anzeige (23) den zweiten lichtemittierenden Bereich (25) und den dritten lichtemittierenden Bereich (26) an einer zweiten Seite des ersten lichtemittierenden Bereichs (24), der ersten Seite entgegengesetzt, im Falle eines Motordrehmoments fortschreitend beleuchtet, welches unter das optimale Drehmoment sinkt.

10. Vorrichtung (1) nach einem der vorhergehenden Ansprüche, umfassend einen Geschwindigkeitsschalter (27), welcher zwei oder mehr stabile Schaltpositionen aufweist, welche verschiedenen Rotationsgeschwindigkeiten des Motors (3) entsprechen.

11. Vorrichtung (1) nach einem der vorhergehenden Ansprüche, wobei die wiederaufladbare Batterie (7) reversibel mechanisch mit einer Batterieschnittstelle (28) gekoppelt ist, welche in einem oberen Bereich des Elektromotors (3) gebildet ist, welcher in die Bohrrichtung (12) weist, und welche die Batterie (7) vertikal über der Werkzeugachse (5) und in Bezug auf die Arbeitsebene (17) im Wesentlichen zentriert positioniert.

12. Vorrichtung (1) nach Anspruch 11, wobei die Batterieschnittstelle (28) und die Batterie (7) dazu eingerichtet sind, miteinander durch Gleiten der Batterie (7) von oben nach unten mechanisch zu koppeln und elektrisch zu verbinden.

13. Vorrichtung (1) nach einem der vorhergehenden Ansprüche, umfassend eine weitere Anzeige (29), welche mit der Regel-/Steuereinheit (21) verbunden ist, für eine Anzeige von numerischen Betriebsparametern und numerischen Regel-/Steuerparametern der Vorrichtung (1).

## Revendications

1. Appareil (1) permettant de forer des rails de chemin de fer (2), comprenant une partie de support (8) qui supporte un moteur électrique fonctionnant sur batterie (3), un outil de forage (4) définissant un axe d'outil (5) et une direction de forage (12), un démultiplicateur (6) interposé entre le moteur (3) et l'outil de forage (4), une batterie remplaçable (7) et des moyens (13) pour fixer de manière amovible la partie de support (8) à un objet devant être foré,
**caractérisé en ce qu'**il comprend un système d'éclairage (14) ayant deux sources lumineuses (15, 16) séparées l'une de l'autre et agencées sur deux côtés opposés par rapport à un plan de travail vertical théorique (17) contenant l'axe d'outil (5), dans lequel les deux sources lumineuses (14, 15) génèrent deux champs lumineux qui se chevauchent au moins partiellement dans une zone de forage (18) de l'outil de forage (4).

2. Appareil (1) selon la revendication 1, dans lequel :
- la partie de support (8) est sensiblement en forme de « L » avec une première aile (9) qui forme une partie de jonction (10), à laquelle le moteur électrique (3) est couplé, et une seconde aile (11) s'étendant dans une direction transversale par rapport à la première aile (9) et supportant l'outil de forage (4),
- le moteur électrique (3) est agencé au-dessus de la seconde aile (11) et est verticalement espacé de celle-ci,
- le moteur électrique (3) et la seconde aile (11) font tous deux saillie de la première aile (9) dans une même direction de forage (12) de l'appareil (1), donnant à l'appareil (1) une forme en « U ».

3. Appareil (1) selon la revendication 1 ou 2, dans lequel les sources lumineuses (15, 16) sont agencées au niveau de régions terminales opposées d'une tige allongée (19) liée au moteur électrique (3) et étendue dans une direction transversale par rapport au plan de travail (17).

4. Appareil (1) selon la revendication 2 ou selon les revendications 2 et 3, dans lequel les sources lumineuses (15, 16) sont agencées sur un côté inférieur du moteur électrique (3) faisant face à la seconde aile (11), mais au-dessus de la seconde aile (11) et espacées verticalement de l'axe d'outil (5), dans lequel les champs lumineux des sources lumineuses (15, 16) sont dirigés dans la direction de forage (12) et vers le bas et des axes centraux des champs lumineux des sources lumineuses (15, 16) sont dirigés de manière convergente et oblique vers le plan de travail (17).

5. Appareil (1) selon une quelconque revendication précédente, dans lequel les sources lumineuses (15, 16) sont agencées latéralement à l'extérieur d'une dimension globale latérale perpendiculaire au plan de travail (17) des moyens de fixation (13).

6. Appareil (1) selon une quelconque revendication précédente, comprenant une unité de commande électronique (21) connectée à la batterie rechargeable (7), au moteur électrique (3), au système d'éclairage (14), et avec des moyens de commande manuels (22) qui peuvent être positionnés dans trois positions de commutation différentes :
- une position « arrêt » stable,
- une position « marche » stable
- une position « mise en place d'outil » instable,
dans lequel :
- lorsque les moyens de commande (22) sont commutés sur la position « marche » stable, ladite position « marche » est engagée de manière stable et l'unité de commande (21) actionne le moteur (3) qui reste alors en fonctionnement à une vitesse de rotation préétablie,
- lorsque les moyens de commande (22) sont commutés sur la position « arrêt » stable, ladite position « arrêt » est engagée de manière stable et l'unité de commande (21) arrête le moteur (3), qui reste alors à l'arrêt,
- lorsque les moyens de commande (22) sont commutés sur la position « mise en place d'outil » instable, ladite position « mise en place d'outil » n'est pas engagée de manière stable et l'unité de commande (21) actionne le moteur (3) à une vitesse de rotation réduite par rapport à la vitesse de rotation de fonctionnement, dans lequel le moteur (3) n'effectue qu'une phase de rotation prédéfinie à chaque commutation dans la position « mise en place d'outil », dans lequel ladite phase de rotation prédéfinie entraîne une rotation de moins de 90° d'un mandrin (36) qui supporte l'outil de forage (4).

7. Appareil (1) selon la revendication 6, dans lequel l'unité de commande (21) est configurée de sorte que lorsque les moyens de commande (22) sont commutés sur la position « marche » :
- si une valeur limite supérieure de couple demandé au moteur (3) est dépassée, le moteur (3) est arrêté et peut être démarré de nouveau uniquement si les moyens de commande (22) sont commutés en position « arrêt » puis à nouveau en position « marche ».
- l'unité de commande (21) stocke le temps total de fonctionnement du moteur électrique (3) et génère un avertissement de nécessité de maintenance qui dépend du temps total de fonctionnement et d'une valeur de comparaison prédéfinie.

8. Appareil (1) selon la revendication 6 ou 7, comprenant un dispositif d'affichage multicolore (23) connecté par signaux à l'unité de commande (21) et ayant une première zone d'émission de lumière (24) d'une première couleur, au moins une deuxième zone d'émission de lumière (25) d'une deuxième couleur, et au moins une troisième zone d'émission de lumière (26) d'une troisième couleur,
dans lequel l'unité de commande (21) commande le dispositif d'affichage multicolore (23) afin de générer un ou plusieurs des avertissements visuels suivants :
- état de charge de la batterie (7),
- anomalie de forage,
- erreur d'alimentation électrique,
- nécessité de maintenance,
- conditions de forage en temps réel.

9. Appareil (1) selon la revendication 8, dans lequel :
- en cas d'avertissement concernant l'état de charge de la batterie (7), l'éclairage de la première zone d'émission de lumière (24) indique un niveau de charge élevé, l'éclairage de la deuxième zone d'émission de lumière (25) indique un niveau de charge suffisant, l'éclairage de la troisième zone d'émission de lumière (26) indique un niveau de charge insuffisant,
- en cas d'avertissement d'anomalie de forage, lorsqu'un couple moteur maximum préétabli est dépassé, le dispositif d'affichage multicolore (23) indique une situation de blocage en éclairant la troisième zone d'émission de lumière (26),
- en cas d'avertissement d'erreur d'alimentation électrique, en cas d'insertion d'une batterie non adaptée et/ou en cas d'insertion de batterie (7) alors que les moyens de commande sont commutés sur la position « marche », le dispositif d'affichage multicolore (23) indique l'anomalie en éclairant la troisième zone d'émission de lumière (26),
- en cas d'avertissement de nécessité de maintenance, lorsqu'un nombre maximum préétabli d'heures de fonctionnement en mode « marche » est atteint, le dispositif d'affichage multicolore (23) indique qu'une maintenance est nécessaire en faisant clignoter les première, deuxième et troisième (24, 25, 26) zones d'émission de lumière simultanément ou séquentiellement,
- en cas d'indication des conditions de forage en temps réel, le dispositif d'affichage multicolore (23) maintient la première zone d'émission de lumière (24) éclairée lorsque le moteur (3) fonctionne dans une plage de couple optimale, et dans lequel le dispositif d'affichage multicolore (23) éclaire progressivement la deuxième zone d'émission de lumière (25) et la troisième zone d'émission de lumière (26) sur un premier côté de la première zone d'émission de lumière (24) en cas d'augmentation de la demande de couple moteur, et dans lequel le dispositif d'affichage multicolore (23) éclaire progressivement la deuxième zone d'émission de lumière (25) et la troisième zone d'émission de lumière (26) sur un second côté de la première zone d'émission de lumière (24), à l'opposé du premier côté, lorsque le couple moteur descend en deçà du couple optimal.

10. Appareil (1) selon l'une des revendications précédentes, comprenant un commutateur de vitesse (27) ayant deux positions de commutation stables ou plus correspondant à différentes vitesses de rotation du moteur (3).

11. Appareil (1) selon l'une des revendications précédentes, dans lequel la batterie rechargeable (7) est mécaniquement couplée de manière réversible à une interface de batterie (28) formée dans une partie supérieure du moteur électrique (3) faisant face à la direction de forage (12) et qui positionne la batterie (7) verticalement au-dessus de l'axe d'outil (5) et sensiblement centrée par rapport au plan de travail (17).

12. Appareil (1) selon la revendication 11, dans lequel l'interface de batterie (28) et la batterie (7) sont configurées pour être mécaniquement couplées et électriquement connectées l'une à l'autre en glissant la batterie (7) de haut en bas.

13. Appareil (1) selon une quelconque revendication précédente, comprenant un autre dispositif d'affichage (29) connecté à l'unité de commande (21) pour afficher des paramètres numériques de fonctionnement et des paramètres numériques de commande de l'appareil (1).
